# EUROPEAN PATENT APPLICATION

(11) **EP 4 693 007 A1**
(43) Date of publication of application: **11.02.2026**
(21) Application number: 24784180.2
(22) Date of filing: 29.03.2024
(51) Int. Cl.: G06F 3/0483

(54) **CONTENT DISPLAY METHOD AND APPARATUS, DEVICE, COMPUTER READABLE STORAGE MEDIUM, AND PRODUCT**

(30) Priority: 04.04.2023 CN 202310357275
(71) Applicant: Beijing Zitiao Network Technology Co., Ltd., Beijing 100190 (CN)
(72) Inventor: ZHAO, Jiarui, Beijing 100028 (CN); ZHANG, Tian, Beijing 100028 (CN); XUE, Haiying, Beijing 100028 (CN)
(74) Representative: Isarpatent
(86) International application number: PCT/CN2024/084700
(87) International publication number: WO 2024/208095

(57) **Abstract**

Embodiments of the present disclosure provide a content display method and apparatus, a device, a computer readable storage medium, and a product. The method comprises: displaying a preset first media content stream in a media content display interface in a preset first layout mode; if an interaction operation of a user for the first media content stream meets a preset condition, in response to a switching operation triggered by the user for media content in the first media content stream, switching, in the media content display interface, a switching control for displaying a second media content stream; and in response to a triggering operation of the user for the switching control, switching the first media content stream displayed in the media content display interface in the first layout mode to the second media content stream displayed in a second layout mode.

## Description

### CROSS-REFERENCE TO RELATED APPLICATIONS

The present application is based on and claims the priority to the Chinese application No. 202310357275.X filed on April 4, 2023, the disclosure of which is incorporated by reference herein in its entirety.

### TECHNICAL FIELD

Embodiments of the present disclosure relate to the technical field of interface interaction, and in particular, to a content presentation method and apparatus, a device, a computer-readable storage medium, and a product.

### BACKGROUND

A user may browse a media content stream in the Internet. However, during the browsing process, the user can only perform operations such as browsing, interacting, with at least one media content in the media content stream within a media content presentation interface. Often the interaction is single, and the content that the user can browse is single.

### SUMMARY

The embodiments of the present disclosure provide a content presentation method and apparatus, a device, a computer-readable storage medium and a product.

In a first aspect, an embodiment of the present disclosure provides a content presentation method, comprising:
presenting a preset first media content stream in a media content presentation interface in a preset first layout mode; the first media content stream comprising at least one media content;
if an interaction operation of a user for the first media content stream meets a preset condition, in response to a switch operation triggered by the user for media content in the first media content stream, switching, in the media content presentation interface, a switch control for presenting a second media content stream, wherein, the second media content stream is presented in a second layout mode; and
in response to a trigger operation of the user for the switch control, switching the media content presentation interface from the first media content stream presented in the first layout mode to display the second media content stream in the second layout mode.

In a second aspect, an embodiment of the present disclosure provides a content presentation apparatus, comprising:
a presenting module configured to, present a preset first media content stream in a media content presentation interface in a preset first layout mode; the first media content stream comprising at least one media content;
a triggering module configured to, if an interaction operation of a user for the first media content stream meets a preset condition, in response to a switch operation triggered by the user for media content in the first media content stream, switch, in the media content presentation interface, a switch control for presenting a second media content stream, wherein, the second media content stream is presented in a second layout mode; and
a switching module configured to, in response to a trigger operation of the user for the switch control, switch the media content presentation interface from the first media content stream presented in the first layout mode to display the second media content stream in the second layout mode.

In a third aspect, an embodiment of the present disclosure provides an electronic device, comprising: a processor and a memory;
the memory storing computer-executable instructions;
the processor executing the computer-executable instructions stored by the memory, to cause the at least one processor to perform the content presentation method according to the first aspect and various possible designs of the first aspect.

In a fourth aspect, an embodiment of the present disclosure provides a computer-readable storage medium having stored thereon computer-executable instructions which, when executed by a processor, implement the content presentation method according to the first aspect and various possible designs of the first aspect.

In a fifth aspect, an embodiment of the present disclosure provides a computer program product comprising a computer program which, when executed by a processor, implements the content presentation method according to the first aspect and various possible designs of the first aspect.

In the content presentation method and apparatus, device, computer-readable storage medium, and product according to the embodiments, when it is detected that an interaction operation of a user for the first media content stream meets a preset condition, in response to a switch operation triggered by the user for media content in the first media content stream, a switch control is switched for presenting a second media content stream. In response to a trigger operation of the user for the switch control, the media content presentation interface is switched from the first media content stream presented in the first layout mode to display the second media content stream in the second layout mode.

### BRIEF DESCRIPTION OF THE DRAWINGS

In order to more clearly illustrate the embodiments of the present disclosure or technical solutions in related arts, the drawings used in the description of the embodiments or related arts will be briefly described below, and it is obvious that the drawings in the description below are some embodiments of the present disclosure, and for those skilled in the art, other drawings can be obtained according to the drawings without creative efforts.
FIG. 1 is a schematic flow diagram of a content presentation method provided by an embodiment of the present disclosure;
FIG. 2 is a schematic diagram of an interface interaction provided by an embodiment of the present disclosure;
FIG. 3 is a schematic diagram of yet another interface interaction provided by an embodiment of the present disclosure;
FIG. 4 is a schematic diagram of yet another interface interaction provided by an embodiment of the present disclosure;
FIG. 5 is a schematic diagram of yet another interface interaction provided by an embodiment of the present disclosure;
FIG. 6 is a schematic diagram of yet another interface interaction provided by an embodiment of the present disclosure;
FIG. 7 is a schematic structural diagram of a content presentation apparatus provided by an embodiment of the present disclosure;
FIG. 8 is a schematic structural diagram of an electronic device provided by an embodiment of the present disclosure.

### DETAILED DESCRIPTION

To make the objectives, technical solutions and advantages of the embodiments of the present disclosure more apparent, the technical solutions in the embodiments of the present disclosure will be described clearly and completely with reference to the drawings in the embodiments of the present disclosure, and it is obvious that the described embodiments are some, but not all embodiments of the present disclosure. All other embodiments, which can be derived by a person skilled in the art from the embodiments disclosed herein without creative efforts, are intended to be within the scope of the present disclosure.

In order to solve the technical problem that the content presentation and interaction in the current media content presentation interface are single, the present disclosure provides a content presentation method and apparatus, a device, a computer-readable storage medium and a product.

It should be noted that the content presentation method and apparatus, device, computer-readable storage medium and product provided by the present disclosure may be applied to any presentation scenario of media content.

The current media content presentation interface generally can only present a plurality of media contents in the same media content, and often is single in presentation content, so that a user cannot browse more media contents in the media content presentation interface. The user can interact with the media content only by triggering the interface of a preset interaction style. Therefore, the current media content presentation method is single in interaction mode.

In order to enrich the interaction mode and the presentation content in the media content presentation interface, a preset first media content stream can be presented in the media content presentation interface in a preset first layout mode, and an interaction operation triggered by a user for each media content stream is determined. When the interaction operation meets a preset condition, in response to a switch operation triggered by the user for media content in the first media content stream, presenting a switch control, instead of presenting the media content in the first media content stream, so that the user can view the second media content stream in the media content presentation interface based on a trigger operation on the switch control, thereby enriching the interaction mode in the media content presentation interface.

Further, media content in the second media content stream may be presented in a preset second layout mode in the media content presentation interface. The first layout mode is a layout mode different from the first layout mode. By switching the layout mode, the presentation effect in the media content presentation interface can be enriched on the basis of enriching the presentation content in the media content presentation interface.

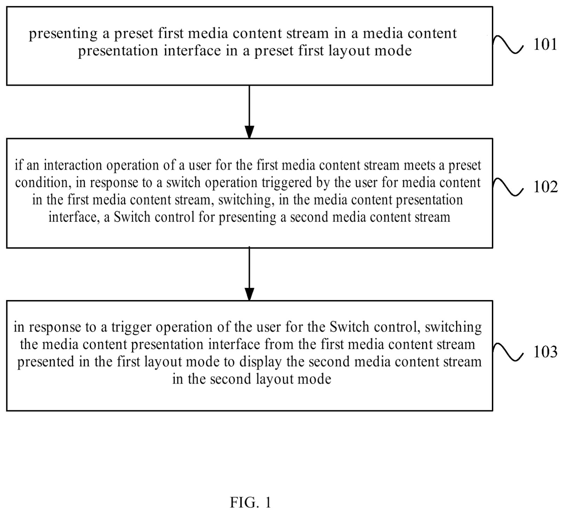

FIG. 1 is a schematic flow diagram of a content presentation method provided by an embodiment of the present disclosure, as shown in FIG. 1, comprising:
step 101, presenting a preset first media content stream in a media content presentation interface in a preset first layout mode, the first media content stream comprising at least one media content.

The execution subject of the embodiment is a content presentation apparatus. The content presentation device can be coupled to a terminal device, so as to be capable of performing a content display operation in response to a trigger operation of the user on the terminal device.

In this embodiment, the first media content stream may be presented in the media content presentation interface, wherein, the first media content stream includes at least one media content. The user can view at least one media content in the first media content stream through a preset switch operation in the media content presentation interface.

Optionally, a preset first media content stream may be presented in the media content presentation interface in a preset first layout mode. When the first media content stream is presented in the first layout mode, only one media content in the first media content stream is presented in the media content presentation interface.

Step 102, if an interaction operation of a user for the first media content stream meets a preset condition, in response to a switch operation triggered by the user for media content in the first media content stream, switching, in the media content presentation interface, a switch control for presenting a second media content stream, wherein, the second media content stream is presented in a second layout mode.

In this embodiment, when the user browses the first media content stream in the media content presentation interface, an interaction operation may be triggered based on the media content in the first media content stream. The interaction operation includes, but is not limited to, a switch operation, a like operation for the media content in the first media content stream, an operation of clicking on a control not of interest, and the like.

In order to enable the user to browse content more suitable for personalized requirements of the user in the media content presentation interface, a preset condition can be preset. Whether the interaction operation of the user for the first media content stream meets the preset condition is detected. If yes, a preset switch control can be inserted after the media content currently browsed by the user.

Further, in response to a switch operation triggered by the user for media content in the first media content stream, a switch control for presenting the second media content stream may be switched in the media content presentation interface, wherein, the second media content stream is presented in the second layout mode.

Optionally, the second layout mode is different from the first layout mode. When the second media content stream is presented in the second layout mode, a plurality of media contents in the second media content stream are presented in the media content presentation interface. Thus, when the second media content stream is presented in the second layout mode, the user can view more media contents in the media content presentation interface.

Optionally, the media content in the first media content stream is different from the media content in the second media content. In the above example, when the user is not interested in the media content in the first media content stream, the second media content stream may be presented to the user through the switch control, wherein, the first media content stream and the second media content stream may belong to different content channels. Or, when the user pays attention to a certain target type of media content in the first media content stream, the second media content stream may be presented to the user through the switch control, wherein, the second media content stream may include a plurality of media contents corresponding to the target type.

Step 103, in response to a trigger operation of the user for the switch control, switching the media content presentation interface from the first media content stream presented in the first layout mode to display the second media content stream in the second layout mode.

In this embodiment, after the switch control is displayed, the user may perform a trigger operation on the switch control according to actual requirements, so as to browse the second media content stream. Or, the user may not perform a trigger operation on the switch control, and continue browsing the media content in the first media content stream.

Correspondingly, in response to the trigger operation of the user for the switch control, the media content presentation interface can be switched from the first media content stream presented in the first layout mode to display the second media content stream in the second layout mode.

By adjusting the layout mode in the media content presentation interface, the presentation effect in the media content presentation interface can be enriched. In addition, when the second media content stream is presented in the second layout mode, the user can view more media contents in the second media content stream in the media content presentation interface.

In the content presentation method provided in this embodiment, when it is detected that an interaction operation of the user for the first media content stream meets a preset condition, in response to a switch operation of the user for media content in the first media content stream, a switch control for presenting the second media content stream is switched. In response to a trigger operation of the user for the switch control, the media content presentation interface is switched from the first media content stream presented in the first layout mode into the second media content stream presented in the second layout mode, so that the content displayed in the media content presentation interface can be enriched, and the user can browse more media contents in the media content presentation interface. In addition, the interaction modes in the media content presentation interface can be enriched.

The media content in the second media content stream is different from that in the first media content stream.

In this embodiment, to enable the user to view more diverse media contents in the media content presentation interface, the media content in the second media content stream is different from that in the first media content stream.

For example, the media content in the second media content stream may differ from that in the first media content stream in subject matter.

In the content presentation method provided in this embodiment, by in response to the trigger operation of the user for the switch control, switching the first media content stream presented in the media content presentation interface to the second media content stream different from the first media content stream in media content, the presentation content in the media content presentation interface can be enriched.

Optionally, at least one media content in the second media content stream is presented in the switch control in the second layout mode.

In this embodiment, in order to enable the user to more intuitively know the second media content stream, at least one media content in the second media content stream may be displayed in the switch control.

Optionally, at least one media content in the second media content stream may be presented in the switch control in the second layout out.

According to the content presentation method provided by the embodiment, by presenting at least one media content in the second media content stream in the switch control in the second layout mode, the user can know the media content in the second media content stream more intuitively based on the switch control.

Optionally, the method further comprises:
when presenting the first media content stream in the first layout mode, presenting only one media content in the first media content stream in the media content presentation interface;
when presenting the second media content stream in the second layout mode, presenting a plurality of media content in the second media content stream in the media content presentation interface.

In this embodiment, the first layout mode and the second layout mode are different layout modes. When presenting the first media content stream in the first layout mode, only one media content in the first media content stream is presented in the media content presentation interface. When presenting the second media content stream in the second layout mode, a plurality of media contents in the second media content stream are presented in the media content presentation interface. Thus, when the second media content stream is presented in the second layout mode, the user can browse more media contents in the media content presentation interface.

For example, when the first media content stream is presented in the first layout mode, a single media content in the first media content stream is presented in full screen in the media content presentation interface. When the second media content stream is presented in the second layout mode, the plurality of media contents in the second media content stream may be presented in the media content presentation interface in a double-row layout mode.

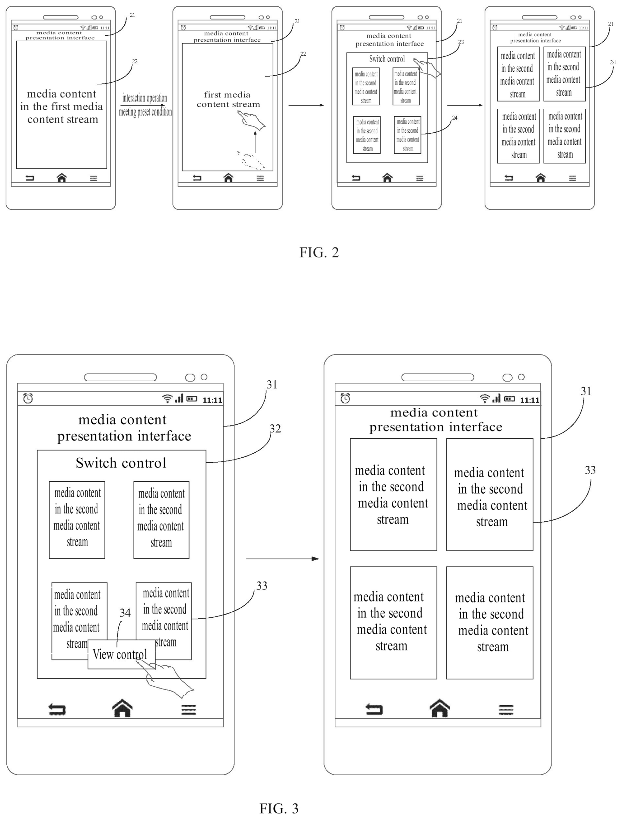

Fig. 2 is an schematic diagram of an interface interaction provided by an embodiment of the present disclosure; as shown in Fig. 2, media content 22 in the first media content stream may be presented in a media content presentation interface 21 in a first layout mode. When presenting content in the first layout mode, only one media content 22 may be presented in the media content presentation interface 21. When it is detected that an interaction operation of the user for the first media content stream meets a preset condition, in response to a switch operation of the user based on the media content 22 in the first media content stream, a switch control 23 for presenting the second media content stream may be switched in the media content presentation interface 21. At least one media content 24 in the second media content stream can be presented in the switch control 23 in the second layout mode. In response to a trigger operation of the user for the switch control 23, the media content presentation interface 21 may be switched from the first media content stream 22 presented in the first layout mode to the second media content stream 24 presented in the second layout mode.

In the content presentation method provided by this embodiment, by switching the media content presentation interface from the first media content stream presented in the first layout mode to display the second media content stream in the second layout mode, the presentation effect in the media content presentation interface can be enriched on the basis of enriching the presentation content in the media content presentation interface.

Further, on the basis of any of the above embodiments, the method further comprises:
acquiring browsing information of the user when browsing the first media content stream, the browsing information comprising a browsing duration corresponding to media content respectively and/or a preset interaction operation performed by the user for the media content;
determining whether the interaction operation of the user for the first media content stream meets the preset condition according to the browsing information.

In this embodiment, in order to enable the switch operation of the media content stream presented in the media content presentation interface, browsing information of the user when browsing the first media content stream may be acquired, and it is determined whether the interaction operation of the user based on the first media content stream currently meets the preset condition based on the browsing information.

Optionally, the browsing information includes a browsing duration corresponding to media content respectively and/or a preset interaction operation performed by the user for the media content. For example, a browsing duration of the user for the media content may be determined, or a preset interaction operation triggered by the user based on the media content in the first media content stream may be determined, wherein, the interaction includes, but is not limited to, an operation in which the user clicks uninteresting, a like operation, or the like for the media content in the first media content stream.

Optionally, on the basis of any of the foregoing embodiments, the determining whether the interaction operation of the user for the first media content stream meets the preset condition according to the browsing information, comprises:
if it is detected according to the browsing information that, a number of media contents with the browsing duration less than a preset duration threshold in the first media content stream exceeds a preset number threshold, within a preset first time range and/or a preset total browsing number, determining that the interaction operation of the user for the first media content stream meets the preset condition;
   and/or,
if it is detected according to the browsing information that, the user performs a preset interaction operation for a preset number of media contents, within a preset first time range and/or a preset total browsing number, determining that the interaction operation of the user for the first media content stream meets the preset condition.

In this embodiment, after determining browsing information generated by the user for the first media content stream, the number of media contents with browsing duration less than the preset duration threshold in the first media content stream, within the preset first time range and/or the preset total browsing number, may be determined according to the browsing information. It is detected whether the number is greater than a preset number threshold, and if so, it can be determined that the interaction operation of the user for the first media content stream meets the preset condition. Further, as long as the media contents with the browsing duration less than the preset duration threshold are continuous media contents in the first media content stream, it is determined that the interaction operation of the user for the first media content stream meets the preset condition,.

For example, in practical applications, if the user browses the first media content stream in the media content presentation interface, and within five minutes, browses four continuous media contents each for less than three seconds, it may be determined that a current interaction operation of the user meets the preset condition.

Optionally, after the browsing information generated by the user for the first media content stream is determined, if it is detected according to the browsing information that, the user performs a preset interaction operation for a preset number of media contents, within a preset first time range and/or a preset total browsing number, it is determined that the interaction operation of the user for the first media content stream meets the preset condition.

Optionally, the preset interaction operation comprises an uninteresting trigger operation for the media content in the first media content stream.

Optionally, the user may perform the uninteresting operation by triggering an Uninteresting control associated with the media content in the first media content stream. The Uninteresting control can be normally presented in the media content presentation interface. Or, the Uninteresting control can be presented in response to a preset gesture operation such as click, long press, triggered by the user for the media content, or the uninteresting operation can be triggered by continuous click and the like. The present disclosure is not so limited.

Still by way of example in practical applications, if, when performing a browsing operation on the first media content stream in the media content presentation interface, the user performs a trigger operation on the Uninteresting control associated with two media contents within five minutes, it is determined that the current interaction operation of the user meets the preset condition.

According to the content presentation method provided by the embodiment, by acquiring the browsing information of the user when browsing the first media content stream, a presentation occasion of the switch control can be accurately determined according to the browsing information, such that the content presented in the media content presentation interface is more suitable for the personalized requirements of the user.

Optionally, on the basis of any of the foregoing embodiments, the switch control further includes a preset view control. Step 103 comprises:
in response to a trigger operation of the user for the view control, switching the media content presentation interface from the first media content stream presented in the first layout mode to display the second media content stream in the second layout mode;
   or,
in response to a trigger operation of the user for any media content in the second media content stream presented in the switch control, switching the media content presentation interface from the first media content stream presented in the first layout mode to display the second media content stream in the second layout mode.

In this embodiment, a view control may be disposed in the switch control. After the switch control is presented in the media content presentation interface, in response to a trigger operation of the user for the view control, the media content presentation interface can be switched from the first media content stream displayed in the first layout mode to display the second media content stream in the second layout mode.

FIG. 3 is a schematic diagram of yet another interface interaction provided by an embodiment of the present disclosure; as shown in FIG. 3, a switch control 32 may be displayed in the media content presentation interface 31, where at least one media content 33 in the second media content stream in a preset second layout mode, and a preset view control 34 may be presented in the switch control 32. In response to a trigger operation of the user for the view control 34, the presentation may be switched in the media content presentation interface 31 to display the second media content stream 33 in the second layout mode.

Optionally, at least one media content in the second media content stream may be presented in the switch control in the preset second layout mode. In response to a trigger operation of the user for any media content presented in the switch control, the media content presentation interface is switched from the first media content stream presented in the first layout mode to display the second media content stream in the second layout mode.

According to the content presentation method provided by the embodiment, by providing a view control in the switch control, the user can quickly realize the switch operation for the presentation content in the media content presentation interface, based on the view control and/or the trigger operation for any media content in the second media content stream. The interaction mode in the media content presentation interface is enriched, and the content switching mode is more flexible.

Further, on the basis of any of the above embodiments, the switch control further includes a Close control. After step 102, the method further comprises:
in response to a trigger operation of the user for the Close control, closing the switch control, and switching to present the media content in the first media content stream;
or, step 102 further comprises:
   in response to a first swipe operation triggered by the user in the media content presentation interface, closing the switch control, and switching to present the media content in the first media content stream.

In this embodiment, the user may switch the browsing of the second media content stream based on the switch control, or the user may close the switch control to continue browsing the first media content stream.

Optionally, the switch control further includes a Close control. The user can quickly close the switch control based on the trigger operation for the Close control. In response to the trigger operation of the user for the Close control, the switch control can be closed, and switched to present the media content in the first media content stream.

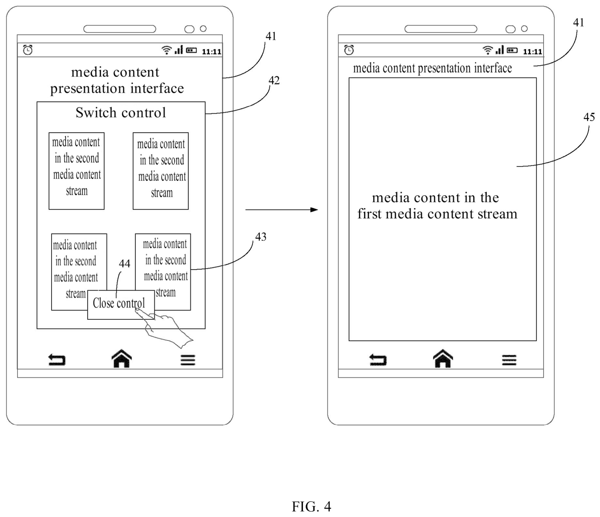

FIG. 4 is a schematic diagram of yet another interface interaction provided by an embodiment of the present disclosure; as shown in FIG. 4, a switch control 42 may be displayed in a media content presentation interface 41, where at least one media content 43 in the second media content stream in a preset second layout mode, and a preset Close control 44 may be presented in the switch control 42. In response to a trigger operation of the user for the Close control 44, the switch control 42 may be closed, and switched to present media content 45 in the first media content stream, wherein, the media content 45 in the first media content stream is presented in a first preset layout mode.

As an implementation, the user may also quickly close the switch control through a first swipe operation triggered in the media content presentation interface. In response to a first swipe operation triggered by the user in the media content presentation interface, the switch control is closed, and switched to present the media content in the first media content stream. For example, the first swipe operation may be a swipe up operation. Alternatively, the swipe operation in other directions may be possible, which is not limited by the present disclosure.

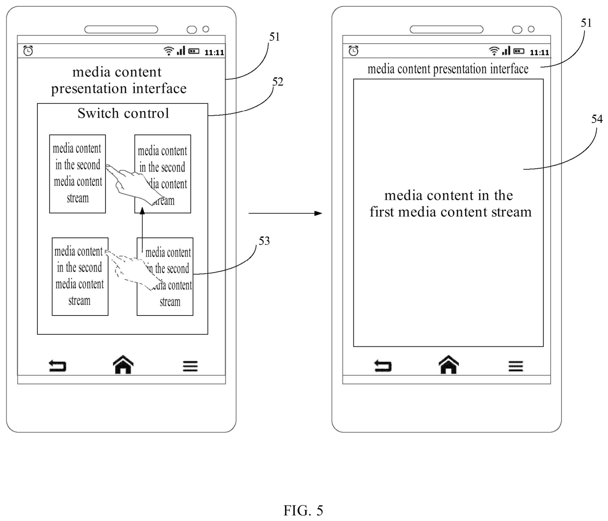

FIG. 5 is a schematic diagram of yet another interface interaction provided by an embodiment of the present disclosure; as shown in FIG. 5, a switch control 52 may be displayed in a media content presentation interface 51, where at least one media content 53 in the second media content stream may be presented in the switch control 52 in a preset second layout mode. In response to a first swipe operation triggered by the user in the media content presentation interface 51, the switch control 52 may be closed, and switched to present media content 54 in the first media content stream, wherein, the media content 54 in the first media content stream is presented in a first preset layout mode.

According to the content presentation method provided by the embodiment, by providing a Close control in the switch control, a user can quickly close the switch control based on the trigger operation for the Close control and/or the first swipe operation triggered in the media content presentation interface. The interaction mode in the media content presentation interface is enriched, and the presentation content in the media content presentation interface is more suitable for the personalized requirements of the user.

Further, on the basis of any of the above embodiments, after the in response to a first swipe operation triggered by the user in the media content presentation interface, closing the switch control, and switching to present the media content in the first media content stream, the method further comprises:
in response to a second swipe operation triggered by the user in the media content presentation interface, re-presenting the switch control;
wherein, the first swipe operation is in a direction opposite to the second swipe operation.

In this embodiment, after the user closes the switch control through the first swipe operation, if it is detected that the user triggers a second swipe operation opposite to the first swipe operation, in the media content presentation interface, the switch control may be re-presented.

For example, in practical applications, the user may close the switch control by swipe up, so as to continuously browse the media content in the first media content stream. If a swipe down operation triggered by the user is acquired, the switch control can be re-presented.

According to the content presentation method provided by the embodiment, by re-presenting the switch control in response to the second swipe operation triggered by the user in the media content presentation interface, the user can flexibly switch the presentation content in the media content presentation interface through the swipe operation, enriching the interaction mode in the media content presentation interface.

Optionally, after the switch control is presented in the media content presentation interface, if it is detected that a count that the user triggers the Close control exceeds a preset first count threshold, then it is detected that the interaction operation of the user for the media content stream meets the preset condition within a preset second time range, in response to the switch operation triggered by the user, the switch control is not presented any more, and other media contents in the media content stream are continuously presented.

Optionally, after the switch control is presented in the media content presentation interface, if it is detected that a count that the user triggers the Close control exceeds a preset second count threshold, then it is detected that the interaction operation of the user for the media content stream meets the preset condition within a preset third time range, in response to the switch operation triggered by the user, the switch control is not presented any more, and other media contents in the media content stream are continuously presented. The third time range is greater than the second time range, and the second count threshold is greater than the first count threshold.

For example, in practical applications, if the user continuously triggers the Close control three times, then it may be detected that, within three days, the interaction operation of the user for the media content stream meets the preset condition, and the switch control is not presented any more, but other media contents in the media content stream are continuously presented. If the user continuously triggers the Close control five times, then it may be detected that, within seven days, the interaction operation of the user for the media content stream meets the preset condition, the switch control is not presented any more, and other media contents in the media content stream are continuously presented.

Optionally, after the switch control is presented in the media content presentation interface, if it is detected that a count that the user closes the switch control through the first swipe operation exceeds a preset third count threshold, it shows that the user is not interested in the second media content stream, wherein, the third count threshold may be three, or may also be a count threshold set by the user, which is not limited by the present disclosure. Then, when it is detected within a preset third time range that the interaction operation of the user for the media content stream meets a preset presentation condition, in response to the switch operation triggered by the user, the switch control is not presented any more, and other media contents in the first media content stream are continuously presented. The third time range may be seven days, or may also be a time threshold set by the user, which is not limited by the present disclosure.

Further, on the basis of any of the above embodiments, the method further comprises:
highlighting at least one media content in the switch control in the media content presentation interface;
   or,
displaying at least one media content in the switch control at a preset display position in the media content presentation interface.

In this embodiment, because at least one media content in the second media content stream is displayed on the switch control, when the user switches to present the second media content stream through the switch control, the user may be interested in the at least one media content displayed in the switch control.

To enable the user to more intuitively locate and view the at least one media content in the switch control, in the second media content stream presented by the media content presentation interface, the at least one media content in the switch control may be highlighted in the media content presentation interface. For example, at least one media content in the switch control may be highlighted in the media content presentation interface. Or, at least one media content in the switch control may be displayed at a preset display position in the media content presentation interface. For example, at least one media content in the switch control may be displayed in the first N display positions in the media content presentation interface.

In the content presentation method provided by this embodiment, at least one media content in the switch control is highlighted in the media content presentation interface. Or, at least one media content in the switch control is displayed at a preset display position in the media content presentation interface, so that a user can more intuitively locate and view at least one media content in the switch control, in the second media content stream presented by the media content presentation interface.

Further, on the basis of any of the above embodiments, after step 103, the method further comprises:
in response to a trigger operation of the user for any target media content in the second media content stream, displaying the target media content in an information presentation interface.

In this embodiment, in order to enable the user to browse more associated information about the media content in the second media content stream, in the browsing process, the user may perform a trigger operation on any target media content in the second media content stream. In response to the trigger operation, an information presentation interface can be displayed, and the target media content can be presented in the information presentation interface.

Alternatively, all content associated with the target media content may be displayed in full screen in the information presentation interface.

Further, on the basis of any of the above embodiments, after step 103, the method further comprises:
presenting a preset return control in the media content presentation interface;
in response to a trigger operation of the user for the return control, re-presenting the first media content stream in the first layout mode.

In this embodiment, when the user performs a browsing operation on the second media content stream in the media content presentation interface, the media content presentation interface may be further controlled through a preset trigger operation to switch to present the media content of the first media content stream.

Optionally, after the media content presentation interface is switched to present the second media content stream, a preset return control may be presented in the media content presentation interface. In response to a trigger operation of the user for the Return control, the first media content stream may be re-presented in the first layout mode.

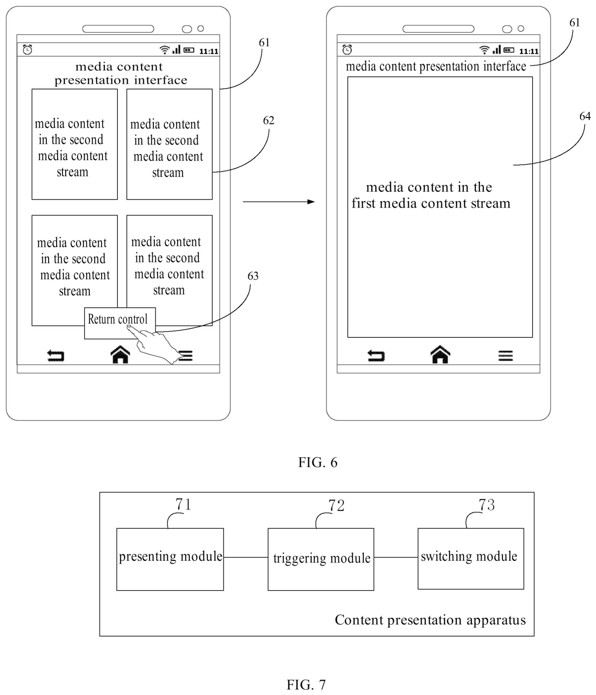

FIG. 6 is a schematic diagram of yet another interface interaction provided by an embodiment of the present disclosure; as shown in FIG. 6, when media content 62 in the second media content stream is presented in a media content presentation interface 61 in the second layout mode, the media content presentation interface 61 further includes a preset return control 63. In response to a trigger operation of the user for the return control 63, media content 64 in the first media content stream may be re-presented in the first layout mode.

According to the content presentation method provided by the embodiment, by presenting a preset return control in the media content presentation interface, a user can flexibly switch the presentation content in the media content presentation interface based on the Return control, enriching the presentation content and the interaction mode in the media content presentation interface.

FIG. 7 is a schematic structural diagram of a content presentation apparatus provided by an embodiment of the present disclosure; as shown in FIG. 7, the apparatus includes: a presenting module 71, a triggering module 72 and a switching module 73. The presenting module 71 is configured to, present a preset first media content stream in a media content presentation interface in a preset first layout mode; the first media content stream comprising at least one media content. The triggering module 72 is configured to, if an interaction operation of a user for the first media content stream meets a preset condition, in response to a switch operation triggered by the user for media content in the first media content stream, switch, in the media content presentation interface, a switch control for presenting a second media content stream, wherein, the second media content stream is presented in a second layout mode. The switching module 73 is configured to, in response to a trigger operation of the user for the switch control, switch the media content presentation interface from the first media content stream presented in the first layout mode to display the second media content stream in the second layout mode.

Further, on the basis of any of the above embodiments, at least one media content in the second media content stream is presented in the switch control in the second layout mode.

Further, on the basis of any one of the above embodiments, the apparatus further comprises: an acquiring module configured to, acquire browsing information of the user when browsing the first media content stream, the browsing information comprising a browsing duration corresponding to media content respectively and/or a preset interaction operation performed by the user for the media content; and a determining module configured to determine whether the interaction operation of the user for the first media content stream meets the preset condition according to the browsing information.

Further, on the basis of any of the above embodiments, the determining module is configured to: if it is detected according to the browsing information that, a number of media contents with the browsing duration less than a preset duration threshold in the first media content stream exceeds a preset number threshold, within a preset first time range and/or a preset total browsing number, determine that the interaction operation of the user for the first media content stream meets the preset condition, and/or, if it is detected according to the browsing information that, the user performs a preset interaction operation for a preset number of media contents, within a preset first time range and/or a preset total browsing number, determine that the interaction operation of the user for the first media content stream meets the preset condition.

Further, on the basis of any of the above embodiments, the preset interaction operation comprises an uninteresting trigger operation for the media content in the first media content stream.

Further, on the basis of any of the above embodiments, the switch control further includes a preset view control. The switching module is configured to: in response to a trigger operation of the user for the view control, switch the media content presentation interface from the first media content stream presented in the first layout mode to display the second media content stream in the second layout mode; or, in response to a trigger operation of the user for any media content in the second media content stream presented in the switch control, switch the media content presentation interface from the first media content stream presented in the first layout mode to display the second media content stream in the second layout mode.

Further, on the basis of any of the above embodiments, the switch control further includes a Close control. The apparatus further comprises: the switching module further configured to, in response to a trigger operation of the user for the Close control, close the switch control and switch to present the media content in the first media content stream. Or, the apparatus further comprises: the switching module further configured to, in response to a first swipe operation triggered by the user in the media content presentation interface, close the switch control and switch to present the media content in the first media content stream.

Further, on the basis of any one of the above embodiments, the apparatus further includes: the presenting module configured to, in response to a second swipe operation triggered by the user in the media content presentation interface, re-present the switch control, wherein the first swipe operation is in a direction opposite to the second swipe operation.

Further, on the basis of any of the above embodiments, the media content in the second media content stream is different from that in the first media content stream.

Further, on the basis of any one of the above embodiments, the apparatus further comprises: the presenting module configured to, highlight at least one media content in the switch control in the media content presentation interface. Or, the presenting module is configured to display at least one media content in the switch control at a preset display position in the media content presentation interface.

Further, on the basis of any one of the above embodiments, the apparatus further comprises: the presenting module configured to, in response to a trigger operation of the user for any target media content in the second media content stream, present the target media content in an information presentation interface.

Further, on the basis of any of the above embodiments, the apparatus further comprises: a processing module configured to, present a preset return control in the media content presentation interface; and, the presenting module configured to, in response to a trigger operation of the user for the return control , re-present the first media content stream in the first layout mode.

Further, on the basis of any one of the above embodiments, the apparatus further comprises: the presenting module configured to, present only one media content in the first media content stream in the media content presentation interface, when presenting the first media content stream in the first layout mode; and, the presenting module configured to, present a plurality of media contents in the second media content stream in the media content presentation interface, when presenting the second media content stream in the second layout mode.

The apparatus provided in this embodiment may be configured to implement the technical solutions of the method embodiments, and the implementation principles and technical effects are similar, which are not described herein again.

In order to implement the foregoing embodiment, an embodiment of the present disclosure further provides an electronic device, including: a processor and a memory;
the memory storing computer-executable instructions;
the processor executing the computer-executable instructions stored by the memory, to cause the processor to perform the content presentation method according to any one of the above embodiments.

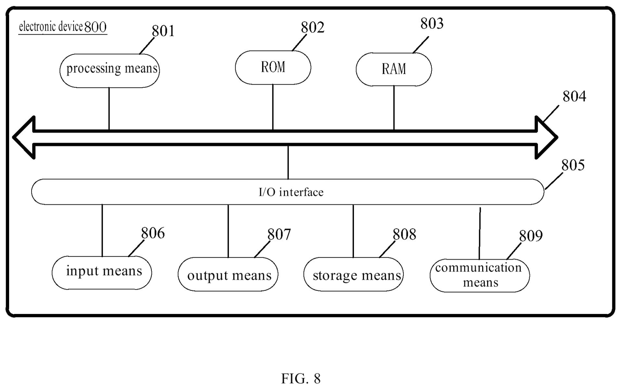

FIG. 8 is a schematic structural diagram of an electronic device provided by an embodiment of the present disclosure; as shown in FIG. 8, the electronic device 800 may be a terminal device or a server. Among them, the terminal device may include, but is not limited to, a mobile terminal such as a mobile phone, a notebook computer, a digital broadcast receiver, a Personal Digital Assistant (PDA), a Portable Android Device (PAD), a Portable Multimedia Player (PMP), a car terminal (e.g., a car navigation terminal), etc., and a fixed terminal such as a digital TV, a desktop computer, etc. The electronic device shown in FIG. 8 is only an example, and should not bring any limitation to the functions and the scope of use of the embodiments of the present disclosure.

As shown in FIG. 8, the electronic device 800 may comprise a processing means (for example, a central processing unit, graphics processing unit, etc.) 801 that can perform various appropriate actions and processes according to a program stored in a read-only memory (ROM) 802 or a program loaded from a storage means 808 into a random access memory (RAM) 803. In the RAM 803, various programs and data necessary for the operation of the electronic device 800 are also stored. The processing means 801, ROM 802, and RAM 803 are connected to each other by a bus 804. An input/output (I/O) interface 805 is also connected to the bus 804.

Generally, the following means may be connected to the I/O interface 805: an input means 806 including, for example, a touch screen, touch pad, keyboard, mouse, camera, microphone, accelerometer, gyroscope, etc.; an output means 807 including, for example, a liquid crystal display (LCD), a speaker, a vibrator, etc.; the storage means 808 including, for example, a magnetic tape, hard disk, etc.; and a communication means 809. The communication means 809 may allow the electronic device 800 to communicate wirelessly or by wire with other devices to exchange data. While FIG. 8 illustrates the electronic device 800 having various means, it should be understood that there is no requirement that all the illustrated means are implemented or provided. More or fewer means may be alternatively implemented or provided.

In particular, according to the embodiment of the present disclosure, the processes described above with reference to the flow diagrams may be implemented as a computer software program. For example, an embodiment of the present disclosure comprises a computer program product comprising a computer program carried on a non-transitory computer-readable medium, the computer program containing program code for performing the method illustrated by the flow diagrams. In such an embodiment, the computer program may be downloaded and installed from a network via the communications means 809, or installed from the storage means 808, or installed from the ROM 802. The computer program, when executed by the processing means 801, performs the above functions defined in the method according to the embodiment of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency), etc., or any suitable combination of the foregoing.

In order to implement the foregoing embodiments, an embodiment of the present disclosure further provides a computer-readable storage medium having stored thereon computer-executable instructions which, when executed by a processor, implement the content presentation method according to any one of the foregoing embodiments.

In order to implement the foregoing embodiments, an embodiment of the present disclosure further provides a computer program product comprising a computer program which, when executed by a processor, implements the content presentation method according to any one of the foregoing embodiments.

The above computer-readable medium may be contained in the above electronic device; or may exist separately without being assembled into the electronic device.

The above computer-readable medium has thereon carried one or more programs which, when executed by the electronic device, enables the electronic device to perform the method shown in the above embodiments.

Computer program code for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself, for example, a first obtaining unit may also be described as a "unit configured to obtain at least two internet protocol addresses".

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In a first aspect, according to one or more embodiments of the present disclosure, there is provided a content presentation method, comprising:
presenting a preset first media content stream in a media content presentation interface in a preset first layout mode; the first media content stream comprising at least one media content;
if an interaction operation of a user for the first media content stream meets a preset condition, in response to a switch operation triggered by the user for media content in the first media content stream, switching, in the media content presentation interface, a switch control for presenting a second media content stream, wherein, the second media content stream is presented in a second layout mode; and
in response to a trigger operation of the user for the switch control, switching the media content presentation interface from the first media content stream presented in the first layout mode to display the second media content stream in the second layout mode.

According to one or more embodiments of the present disclosure, at least one media content in the second media content stream is presented in the switch control in the second layout mode.

According to one or more embodiments of the present disclosure, the method further comprises:
acquiring browsing information of the user when browsing the first media content stream, the browsing information comprising a browsing duration corresponding to media content respectively and/or a preset interaction operation performed by the user for the media content; and
determining whether the interaction operation of the user for the first media content stream meets the preset condition according to the browsing information.

According to one or more embodiments of the present disclosure, the determining whether the interaction operation of the user for the first media content stream meets the preset condition according to the browsing information, comprises:
if it is detected according to the browsing information that, a number of media contents with the browsing duration less than a preset duration threshold in the first media content stream exceeds a preset number threshold, within a preset first time range and/or a preset total browsing number, determining that the interaction operation of the user for the first media content stream meets the preset condition;
   and/or,
if it is detected according to the browsing information that, the user performs a preset interaction operation for a preset number of media contents, within a preset first time range and/or a preset total browsing number, determining that the interaction operation of the user for the first media content stream meets the preset condition.

According to one or more embodiments of the present disclosure, the preset interaction operation comprises an uninteresting trigger operation for the media content in the first media content stream.

According to one or more embodiments of the present disclosure, the switch control further includes a preset view control;
the in response to a trigger operation of the user for the switch control, switching the media content presentation interface from the first media content stream presented in the first layout mode to display the second media content stream in the second layout mode, comprises:
in response to a trigger operation of the user for the view control, switching the media content presentation interface from the first media content stream presented in the first layout mode to display the second media content stream in the second layout mode;
   or,
in response to a trigger operation of the user for any media content in the second media content stream presented in the switch control, switching the media content presentation interface from the first media content stream presented in the first layout mode to display the second media content stream in the second layout mode.

According to one or more embodiments of the present disclosure, the switch control further includes a Close control; after the switching, in the media content presentation interface, a switch control for presenting a second media content stream, the method further comprises:
in response to a trigger operation of the user for the Close control, closing the switch control and switching to present the media content in the first media content stream;
or, after the switching, in the media content presentation interface, a switch control for presenting a second media content stream, the method further comprises:
   in response to a first swipe operation triggered by the user in the media content presentation interface, closing the switch control and switching to present the media content in the first media content stream.

According to one or more embodiments of the present disclosure, after the in response to a first swipe operation triggered by the user in the media content presentation interface, closing the switch control and switching to present the media content in the first media content stream, the method further comprises:
in response to a second swipe operation triggered by the user in the media content presentation interface, re-presenting the switch control,
wherein, the first swipe operation is in a direction opposite to the second swipe operation.

According to one or more embodiments of the present disclosure, the media content in the second media content stream is different from that in the first media content stream.

According to one or more embodiments of the present disclosure, the method further comprises:
highlighting at least one media content in the switch control in the media content presentation interface;
   or,
displaying at least one media content in the switch control at a preset display position in the media content presentation interface.

According to one or more embodiments of the present disclosure, the switching the media content presentation interface from the first media content stream presented in the first layout mode to display the second media content stream in the second layout mode, further comprises:
in response to a trigger operation of the user for any target media content in the second media content stream, presenting the target media content in an information presentation interface.

According to one or more embodiments of the present disclosure, after the switching the media content presentation interface from the first media content stream presented in the first layout mode to display the second media content stream in the second layout mode, the method further comprises:
presenting a preset return control in the media content presentation interface; and
in response to a trigger operation of the user for the Return control, re-presenting the first media content stream in the first layout mode.

According to one or more embodiments of the present disclosure, the method further comprises:
presenting only one media content in the first media content stream in the media content presentation interface, when presenting the first media content stream in the first layout mode; and
presenting a plurality of media contents in the second media content stream in the media content presentation interface, when presenting the second media content stream in the second layout mode.

In a second aspect, according to one or more embodiments of the present disclosure, there is provided a content presentation apparatus, comprising:
a presenting module configured to, present a preset first media content stream in a media content presentation interface in a preset first layout mode; the first media content stream comprising at least one media content;
a triggering module configured to, if an interaction operation of a user for the first media content stream meets a preset condition, in response to a switch operation triggered by the user for media content in the first media content stream, switch, in the media content presentation interface, a switch control for presenting a second media content stream, wherein, the second media content stream is presented in a second layout mode; and
a switching module configured to, in response to a trigger operation of the user for the switch control, switch the media content presentation interface from the first media content stream presented in the first layout mode to display the second media content stream in the second layout mode.

According to one or more embodiments of the present disclosure, at least one media content in the second media content stream is presented in the switch control in the second layout mode.

According to one or more embodiments of the present disclosure, the apparatus further comprises:
an acquiring module configured to, acquire browsing information of the user when browsing the first media content stream, the browsing information comprising a browsing duration corresponding to media content respectively and/or a preset interaction operation performed by the user for the media content; and
a determining module configured to determine whether the interaction operation of the user for the first media content stream meets the preset condition according to the browsing information.

According to one or more embodiments of the present disclosure, the determining module is configured to:
if it is detected according to the browsing information that, a number of media contents with the browsing duration less than a preset duration threshold in the first media content stream exceeds a preset number threshold, within a preset first time range and/or a preset total browsing number, determine that the interaction operation of the user for the first media content stream meets the preset condition;
and/or, if it is detected according to the browsing information that, the user performs a preset interaction operation for a preset number of media contents, within a preset first time range and/or a preset total browsing number, determine that the interaction operation of the user for the first media content stream meets the preset condition.

According to one or more embodiments of the present disclosure, the preset interaction operation comprises an uninteresting trigger operation for the media content in the first media content stream.

According to one or more embodiments of the present disclosure, the switch control further includes a preset view control;
the switching module is configured to:
in response to a trigger operation of the user for the view control, switch the media content presentation interface from the first media content stream presented in the first layout mode to display the second media content stream in the second layout mode;
   or,
in response to a trigger operation of the user for any media content in the second media content stream presented in the switch control, switch the media content presentation interface from the first media content stream presented in the first layout mode to display the second media content stream in the second layout mode.

According to one or more embodiments of the present disclosure, the switch control further includes a Close control; the apparatus further comprises:
the switching module further configured to, in response to a trigger operation of the user for the Close control, close the switch control and switch to present the media content in the first media content stream;
or, the apparatus further comprises:
   the switching module further configured to, in response to a first swipe operation triggered by the user in the media content presentation interface, close the switch control and switch to present the media content in the first media content stream.

According to one or more embodiments of the present disclosure, the apparatus further comprises:
the presenting module configured to, in response to a second swipe operation triggered by the user in the media content presentation interface, re-present the switch control,
wherein the first swipe operation is in a direction opposite to the second swipe operation.

According to one or more embodiments of the present disclosure, the media content in the second media content stream is different from that in the first media content stream.

According to one or more embodiments of the present disclosure, the apparatus further comprises:
the presenting module configured to, highlight at least one media content in the switch control in the media content presentation interface;
   or,
the presenting module configured to display at least one media content in the switch control at a preset display position in the media content presentation interface.

According to one or more embodiments of the present disclosure, the apparatus further comprises:
the presenting module configured to, in response to a trigger operation of the user for any target media content in the second media content stream, present the target media content in an information presentation interface.

According to one or more embodiments of the present disclosure, the apparatus further comprises:
a processing module configured to, present a preset return control in the media content presentation interface; and
the presenting module configured to, in response to a trigger operation of the user for the return control , re-present the first media content stream in the first layout mode.

According to one or more embodiments of the present disclosure, the apparatus further comprises:
the presenting module configured to, present only one media content in the first media content stream in the media content presentation interface, when presenting the first media content stream in the first layout mode; and
the presenting module configured to, present a plurality of media contents in the second media content stream in the media content presentation interface, when presenting the second media content stream in the second layout mode.

In a third aspect, according to one or more embodiments of the present disclosure, there is provided an electronic device, comprising: at least one processor and a memory;
the memory storing computer-executable instructions;
the at least one processor executing the computer-executable instructions stored by the memory, to cause the at least one processor to perform the content presentation method according to the first aspect and various possible designs of the first aspect.

In a fourth aspect, according to one or more embodiments of the present disclosure, there is provided a computer-readable storage medium having stored thereon computer-executable instructions which, when executed by a processor, implement the content presentation method according to the first aspect and various possible designs of the first aspect.

In a fifth aspect, according to one or more embodiments of the present disclosure, there is provided a computer program product comprising a computer program which, when executed by a processor, implements the content presentation method according to the first aspect and various possible designs of the first aspect.

The foregoing description is illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. A content presentation method, comprising:
presenting a preset first media content stream in a media content presentation interface in a preset first layout mode; the first media content stream comprising at least one media content;
in response that an interaction operation of a user for the first media content stream meets a preset condition, in response to a switch operation triggered by the user for media content in the first media content stream, switching, in the media content presentation interface, a switch control for presenting a second media content stream, wherein, the second media content stream is presented in a second layout mode; and
in response to a trigger operation of the user for the switch control, switching the media content presentation interface from the first media content stream presented in the first layout mode to display the second media content stream in the second layout mode.

2. The method according to claim 1, wherein, at least one media content in the second media content stream is presented in the switch control in the second layout mode.

3. The method according to claim 1, further comprising:
acquiring browsing information of the user when browsing the first media content stream, the browsing information comprising at least one of a browsing duration corresponding to media content respectively or a preset interaction operation performed by the user for the media content; and
determining whether the interaction operation of the user for the first media content stream meets the preset condition according to the browsing information.

4. The method according to claim 3, wherein, the determining whether the interaction operation of the user for the first media content stream meets the preset condition according to the browsing information, comprises at least one of:
in response to determining that a number of media contents with the browsing duration less than a preset duration threshold in the first media content stream exceeds a preset number threshold according to the browsing information within at least one of a preset first time range or a preset total browsing number, determining that the interaction operation of the user for the first media content stream meets the preset condition;
or,
in response to determining that according to the browsing information that, the user performs a preset interaction operation for a preset number of media contents, within at least one of a preset first time range or a preset total browsing number, determining that the interaction operation of the user for the first media content stream meets the preset condition.

5. The method according to claim 4, wherein, the preset interaction operation comprises an uninteresting trigger operation for the media content in the first media content stream.

6. The method according to claim 1, wherein, the switch control further includes a preset view control;
the in response to a trigger operation of the user for the switch control, switching the media content presentation interface from the first media content stream presented in the first layout mode to display the second media content stream in the second layout mode, comprises:
in response to a trigger operation of the user for the view control, switching the media content presentation interface from the first media content stream presented in the first layout mode to display the second media content stream in the second layout mode;
or,
in response to a trigger operation of the user for any media content in the second media content stream presented in the switch control, switching the media content presentation interface from the first media content stream presented in the first layout mode to display the second media content stream in the second layout mode.

7. The method according to claim 1, wherein, the switch control further includes a close control; after the switching, in the media content presentation interface, a switch control for presenting a second media content stream, the method further comprises:
in response to a trigger operation of the user for the close control, closing the switch control and switching to present the media content in the first media content stream;
or, after the switching, in the media content presentation interface, a switch control for presenting a second media content stream, the method further comprises:
in response to a first swipe operation triggered by the user in the media content presentation interface, closing the switch control and switching to present the media content in the first media content stream.

8. The method according to claim 7, wherein, after the in response to a first swipe operation triggered by the user in the media content presentation interface, closing the switch control and switching to present the media content in the first media content stream, the method further comprises:
in response to a second swipe operation triggered by the user in the media content presentation interface, re-presenting the switch control,
wherein, the first swipe operation is in a direction opposite to the second swipe operation.

9. The method according to any of claims 1 to 8, wherein, the media content in the second media content stream is different from that in the first media content stream.

10. The method according to claim 9, further comprising:
highlighting at least one media content in the switch control in the media content presentation interface;
or,
displaying at least one media content in the switch control at a preset display position in the media content presentation interface.

11. The method according to any of claims 1 to 8, wherein, after switching the media content presentation interface from the first media content stream presented in the first layout mode to display the second media content stream in the second layout mode, the method further comprises:
in response to a trigger operation of the user for any target media content in the second media content stream, presenting the target media content in an information presentation interface.

12. The method according to any of claims 1 to 8, wherein, after switching the media content presentation interface from the first media content stream presented in the first layout mode to display the second media content stream in the second layout mode, the method further comprises:
presenting a preset return control in the media content presentation interface; and
in response to a trigger operation of the user for the Return control, re-presenting the first media content stream in the first layout mode.

13. The method according to any of claims 1 to 8, further comprising:
presenting only one media content in the first media content stream in the media content presentation interface, when presenting the first media content stream in the first layout mode; and
presenting a plurality of media contents in the second media content stream in the media content presentation interface, when presenting the second media content stream in the second layout mode.

14. A content presentation apparatus, comprising:
a presenting module configured to, present a preset first media content stream in a media content presentation interface in a preset first layout mode; the first media content stream comprising at least one media content;
a triggering module configured to, in response that an interaction operation of a user for the first media content stream meets a preset condition, in response to a switch operation triggered by the user for media content in the first media content stream, switch, in the media content presentation interface, a switch control for presenting a second media content stream, wherein, the second media content stream is presented in a second layout mode; and
a switching module configured to, in response to a trigger operation of the user for the switch control, switch the media content presentation interface from the first media content stream presented in the first layout mode to display the second media content stream in the second layout mode.

15. An electronic device, comprising: a processor and a memory,
the memory storing computer-executable instructions, and
the processor executing the computer-executable instructions stored by the memory, to cause the processor to perform the content presentation method according to any of claims 1 to 13.

16. A computer-readable storage medium having thereon stored computer-executable instructions which, when executed by a processor, implement the content presentation method according to any of claims 1 to 13.

17. A computer program product, comprising a computer program which, when executed by a processor, implements the content presentation method according to any of claims 1 to 13.

18. A computer program which, when executed by a processor, implements the content presentation method according to any of claims 1 to 13.
